# EUROPÄISCHE PATENTANMELDUNG

(11) **EP 4 545 270 A1**
(43) Veröffentlichungstag der Anmeldung: **30.04.2025**
(21) Anmeldenummer: 24182463.0
(22) Anmeldetag: 17.06.2024
(51) Int. Cl.: B29C 49/06, B29C 49/64, B29C 49/78

(54) **REGELKREIS FÜR BEHÄLTERKÜHLUNG**

(30) Priorität: 25.10.2023 DE 102023129375
(71) Anmelder: Krones AG, 93073 Neutraubling (DE)
(72) Erfinder: URBAN, Ralf, 93073 Neutraubling (DE)
(74) Vertreter: Grünecker Patent- und Rechtsanwälte PartG mbB

(57) **Zusammenfassung**

Anlage (100) zur Herstellung und Behandlung von Behältern, umfassend: eine Vorformlingsherstellungsmaschine (101) zum Herstellen von Vorformlingen, insbesondere eine Spritzgussmaschine; wenigstens eine Behälterherstellungseinheit (102) zur Herstellung von Behältern aus den Vorformlingen; wenigstens eine der Behälterherstellungseinheit (102) nachgeordnete Behälterbehandlungseinheit (104) zur Behandlung der in der Behälterherstellungseinheit (102) hergestellten Behältern; eine Kühleinheit (103) zur Kühlung der in der Behälterherstellungseinheit (102) hergestellten Behältern, wobei die Kühleinheit (103) nach der Behälterherstellungseinheit (102) angeordnet ist, und wobei die Kühleinheit (103) dazu konfiguriert ist, die hergestellten Behälter, insbesondere die Böden der hergestellten Behälter, in Abhängigkeit von Steuerparametern der Vorformlingsherstellungsmaschine (101) und/oder in Abhängigkeit von Steuerparametern der Behälterherstellungseinheit (102) und/oder in Abhängigkeit der Behälterbehandlungseinheit (104), mit einem Kühlmedium zu kühlen.

## Beschreibung

### Stand der Technik

Die Erfindung betrifft eine Anlage und ein Verfahren der Lebensmittel- und Getränkeindustrie zur Herstellung und Behandlung von Behältern, worin durch Spritzgussprozesse oder durch andere Prozesse hergestellte Vorformlingen zu Behältern umgeformt werden, z.B. durch Streckblasformung.

Bei bekannten Herstellungsprozessen von Behältern, insbesondere Behältern aus Kunststoff, durch Streckblasformung aus Vorformlingen, erfolgt die Herstellung der Vorformlinge und die Herstellung von Behältern aus den Vorformlingen örtlich und zeitlich getrennt.

So werden beispielsweise die Vorformlinge an einem Ort hergestellt, als Schüttgut gelagert und zu einem späteren Zeitpunkt zu einer Behälterherstellungsanlage an einen anderen Ort transportiert, wo sie wieder sortiert und vereinzelt werden und einer Streckblasmaschine zugeführt werden.

Diese bekannten Herstellungsprozesse sind logistisch sehr aufwendig, teuer und störanfällig.

Zudem weisen bekannte Herstellungsprozesse einen hohen Energiebedarf zur Temperierung, d.h. sowohl zur Erwärmung als auch zur Kühlung der Vorformlinge und der Behälter auf. Verbunden mit den erforderlichen weiten Transportwegen von der Vorformherstellung zur Behälterherstellung, führt dies zu einer schlechten Kohlenstoffbilanz bekannter Herstellungsprozesse.

Zudem können bei bekannten Herstellungsprozessen Temperaturschwankungen auftreten, die sich nachteilig auf die Stabilität und Qualität der aus Kunststoff hergestellten Behälter auswirken können.

### Aufgabe

Es ist daher somit eine Aufgabe der Erfindung, eine verbesserte Anlage und ein verbessertes Verfahren der Lebensmittel- und Getränkeindustrie zur Herstellung und Behandlung von aus Vorformlingen durch Umformung hergestellten Behältern bereitzustellen.

Insbesondere ist es eine Aufgabe der Erfindung, die Effizienz, insbesondere die Energieeffizienz, Wirtschaftlichkeit, Umweltverträglichkeit, Produktqualität, Hygiene und Störanfälligkeit einer Anlage und eines Verfahrens der Lebensmittel- und Getränkeindustrie zur Herstellung und Behandlung von aus Vorformlingen durch Umformung hergestellten Behältern bereitzustellen.

### Lösung

Dies wird erfindungsgemäß durch die Gegenstände der unabhängigen Ansprüche erreicht. Vorteilhafte Ausführungsformen und Weiterbildungen sind Gegenstand der Unteransprüche.

So stellt die Erfindung insbesondere eine Anlage zur Herstellung und Behandlung von Behältern bereit, welche folgende Komponenten umfassen kann:
- eine Vorformlingsherstellungsmaschine zum Herstellen von Vorformlingen, insbesondere eine Spritzgussmaschine,
- wenigstens eine Behälterherstellungseinheit zur Herstellung von Behältern aus den durch die Vorformlingsherstellungsmaschine hergestellten Vorformlingen,
- wenigstens eine der Behälterherstellungseinheit nachgeordnete Behälterbehandlungseinheit zur Behandlung der in der Behälterherstellungseinheit hergestellten Behältern,
- wenigstens eine Kühleinheit, insbesondere eine steuerbare Kühleinheit, zur Kühlung der in der Behälterherstellungseinheit hergestellten Behältern, wobei die wenigstens eine Kühleinheit nach der Behälterherstellungseinheit angeordnet ist, z.B. wobei die wenigstens eine Kühleinheit zwischen der der Behälterherstellungseinheit und der Behälterbehandlungseinheit angeordnet sein kann, und wobei die Kühleinheit dazu konfiguriert sein kann, die hergestellten Behälter, insbesondere die Böden der hergestellten Behälter, in Abhängigkeit von Steuerparametern der Vorformlingsherstellungsmaschine und/oder in Abhängigkeit von Steuerparametern der Behälterherstellungseinheit und/oder in Abhängigkeit der Behälterbehandlungseinheit mit einem Kühlmedium zu kühlen, insbesondere automatisch zu kühlen.

Unter den hierein beschriebenen Behältern und Vorformlingen können insbesondere hierin Behälter und Vorformlingen verstanden werden, die aus Material bestehen, welches Kunststoffmaterialien, z.B. Polyethylenterephthalat (PET) umfasst oder die aus Kunststoffmaterialien, z.B. Polyethylenterephthalat (PET), bestehen.

Besagte beispielhafte Kühleinheit kann nach der Behälterherstellungseinheit angeordnet sein, z.B. kann die besagte beispielhafte Kühleinheit zwischen der Behälterherstellungseinheit und der Behälterbehandlungseinheit angeordnet sein oder die besagte beispielhafte Kühleinheit kann zwischen zwei Behälterbehandlungseinheiten angeordnet sein.

Gemäß der vorangehend und hierein beschriebenen Anlage kann ein Regelkreis, insbesondere ein automatisierter Regelkreis, zur Kühlung der in der Behälterherstellungseinheit hergestellten Behältern, insbesondere zur Kühlung der Böden der hergestellten Behälter, gebildet bzw. realisiert werden, in welchem die Vorformlingsherstellungsmaschine die wenigstens eine Behälterherstellungseinheit, die wenigstens eine der Behälterherstellungseinheit nachgeordnete Behälterbehandlungseinheit und die wenigstens eine Kühleinheit miteinander verbunden sein können, z.B. miteinander in einem Block verbunden sein können.

Dies kann unter anderem zu einer Optimierung der Energieeffizienz der Behälterherstellung aus Vorformlingen führen und insbesondere zu einer optimierten Kühlung der Behälter, insbesondere der Behälterböden, was sich vorteilhaft auf die Formstabilität und Standsicherheit der hergestellten Behälter auswirken kann. Unter anderem kann eine unzureichende, d.h. zu geringe, Bodenfreiheit der hergestellten Behälter vermieden werden.

Behälter aus PET können sehr empfindlich für Temperaturschwankungen sein und die herein beschriebenen Kühlregelkreise können dazu dienen, die Behälter optimal zu temperieren.

Die Qualität der hergestellte Behälter kann also verbessert werden und die Ausschussrate fehlerhafter, z.B. instabiler, Behälter kann reduziert werden und der Energiebedarf für die Kühlung der Behälter, beispielsweise der Energiebedarf einer Luftkühlung und/oder Wasserkühlung, kann reduziert werden.

Zudem ermöglicht die Automatisierung der Kühlungsregelung bzw. die Automatisierung des Regelkreises, dass weniger manuelle Eingriffe oder manuelle Anpassungen der Behälterkühlsysteme, insbesondere der Behälterbodenkühlsysteme erforderlich sind und etwaige Fehler bei der Kühlung leichter und automatisch identifiziert werden können und leichter und schneller behoben werden können. Dies kann unter anderem der Produktionseffizienz zu Gute kommen,

Alle genannten beispielhaften Komponenten der Anlage, d.h. die Vorformlingsherstellungsmaschine, die wenigstens eine Behälterherstellungseinheit, die wenigstens eine der Behälterherstellungseinheit nachgeordnete Behälterbehandlungseinheit und die wenigstens eine Kühleinheit können in einem Block miteinander verbunden sein.

Durch die direkte Verkettung bzw. Verbindung des Herstellungsprozesses der Vorformlinge und der Herstellung von Behältern aus den Vorformlingen am gleichen Ort ist es unter anderem beispielsweise möglich, Transportkosten und Lagerkosten für die Vorformlinge erheblich zu reduzieren bzw. vollständig einzusparen, da die Vorformlinge nicht mehr über lange Transportwege von einer Anlage zur Herstellung der Vorformlinge zur Behälterherstellungsanlage transportiert werden müssen.

Besagte beispielhafte wenigstens eine Behälterbehandlungseinheit kann eine Etikettiermaschine oder eine Abfüllmaschine sein oder umfassen.

So kann beispielsweise die wenigstens eine Kühleinheit zur Kühlung der in der Behälterherstellungseinheit hergestellten Behältern der wenigstens einen Behälterbehandlungseinheit direkt oder mittelbar vorgeordnet sein zur Kühlung der Behälter vor der Etikettiermaschine und/oder vor der Abfüllmaschine.

Die Anlage kann ferner eine Vorformbehandlungseinheit umfassen, zur Behandlung der durch die Vorformlingsherstellungsmaschine hergestellten Behälter.

Beispielsweise kann diese optionale Vorformbehandlungseinheit eine Vorformreinigungseinheit und/oder eine Vorformsterilisierungseinheit sein, wobei die Vorformbehandlungseinheit der Behälterherstellungseinheit vorgeordnet sein kann.

Die besagte beispielhafte Kühleinheit kann dann beispielsweise zudem dazu konfiguriert sein, die hergestellten Behälter, insbesondere die Böden der hergestellten Behälter, in Abhängigkeit von Steuerparametern der Vorformbehandlungseinheit zu kühlen.

Besagtes Kühlmedium, welches von der oben und hierin beschriebenen beispielhaften Kühleinheit eingesetzt werden kann, kann ein gasförmiges Kühlmedium, z.B. Luft, sein und/oder das Kühlmedium kann ein flüssiges Kühlmedium, z.B. Wasser, sein.

Beispielsweise kann die Kühleinheit als Gebläse ausgeführt sein, welches ein gasförmiges Kühlmedium, z.B. Luft, auf die bzw. gegen die zu kühlenden Behälter, insbesondere auf bzw. gegen zu kühlende Behälterböden, blasen kann.

Das Kühlmedium kann dabei von außen gegen die Außenseite der zu kühlenden Behälter, insbesondere gegen die Außenseite der zu kühlenden Behälterböden, geleitet, z.B. geblasen oder gespritzt, werden.

Besagte beispielhafte wenigstens eine Behälterherstellungseinheit zur Herstellung von Behältern aus den Vorformlingen kann eine Streckblasmaschine sein.

Besagte beispielhafte Kühleinheit kann dann zudem dazu konfiguriert sein, die hergestellten Behälter, insbesondere die Böden der hergestellten Behälter, in Abhängigkeit der Steuerparameter der Streckblasmaschine zu kühlen.

Beispielsweise kann die besagte beispielhafte Kühleinheit dazu konfiguriert sein, die hergestellten Behälter, insbesondere die Böden der hergestellten Behälter, in Abhängigkeit von einem oder mehreren oder allen der folgenden Steuerparameter der Streckblasmaschine zu kühlen: Vorblasdruck, Zwischenblasdruck, Fertigblasdruck, dem zeitlichen Verlauf besagter Drücke bzw. dem zeitlichen Verlauf eines oder mehreren Druckprofils besagter Drücke, Temperatur, Steuerparameter eines Heizmoduls der Streckblasmaschine, Steuerparameter eines Kühlmoduls der Streckblasmaschine.

Besagte beispielhafte Vorformlingsherstellungsmaschine zum Herstellen von Vorformlingen kann eine Spritzgussmaschine sein.

Besagte beispielhafte Kühleinheit kann dann zudem dazu konfiguriert sein, die hergestellten Behälter, insbesondere die Böden der hergestellten Behälter, in Abhängigkeit der Steuerparameter der Spritzgussmaschine zu kühlen.

Insbesondere kann die beispielhafte Kühleinheit zudem dazu konfiguriert sein, die hergestellten Behälter, insbesondere die Böden der hergestellten Behälter, in Abhängigkeit von einem oder mehreren oder allen der folgenden Steuerparameter der Spritzgussmaschine zu kühlen: Nachdruck, Einspritzdruck, Einspritzstrom, Spritzprofil, Temperatur, Umschaltvolumen oder Umschaltpunkt.

Im Spritzguss kann der Kunststoff während dem Abkühlen schwinden. Um diese Schwindung kompensieren zu können, kann nach der volumetrischen Formfüllung weiterhin Material in die Kavität gedrückt werden. Die Phase, in der die Schnecke weiterhin Druck auf die Schmelze ausübt, wird dabei Nachdruck bzw. Nachdruckphase genannt.

Besagte beispielhafte Behälterbehandlungseinheit kann eine Abfüllmaschine zur Befüllung der hergestellten Behälter sein.

Besagte beispielhafte Kühleinheit kann dann zudem dazu konfiguriert sein, die hergestellten Behälter, insbesondere die Böden der hergestellten Behälter, in Abhängigkeit von einem oder mehreren oder allen der folgenden Steuerparameter der Abfüllmaschine zu kühlen: Abfülltemperatur, Abfülldosierung.

Die oben und hierin beispielhaft beschriebenen Anlage kann eine übergeordnete programmierbare Steuerungseinheit umfassen, wobei die Steuerungseinheit konfiguriert dazu sein kann, alle oben und hierein genannten Maschinen und Einheiten der Anlage zu steuern und zu regeln.

Insbesondere kann die mögliche beispielhafte Steuerungseinheit dazu programmiert sein, die besagte beispielhafte Kühleinheit zu steuern, insbesondere in Abhängigkeit von den genannten Steuerparametern der oben und hierein genannten Maschinen und Einheiten der Anlage.

Die Stärke, mit der das Kühlmedium von der Kühleinheit gegen die Außenseite der zu kühlenden Behälter, insbesondere gegen die Außenseite der zu kühlenden Behälterböden geleitet, z.B. geblasen oder gespritzt, werden kann, kann dabei ebenfalls in Abhängigkeit der oben und hierein genannten Steuerparameter der oben und hierin genannten Maschinen und Einheiten der Anlage erfolgen.

Ein beispielhaftes Verfahren zum Kühlen von aus Vorformlingen hergestellten Behältern, kann dabei folgende Schritte umfassen:
- ein Kühlen von aus Vorformlingen hergestellten Behältern mittels einer Kühleinheit, insbesondere Kühlen von Böden der aus Vorformlingen hergestellten Behältern, durch ein Kühlmedium, z.B. durch ein gasförmiges Kühlmedium, z.B. Luft, und/oder durch ein flüssiges Kühlmedium, z.B. Wasser,
- und wobei das Kühlen in Abhängigkeit von Steuerparametern einer Vorformlingsherstellungsmaschine zum Herstellen der Vorformlinge geregelt wird,
- und/oder wobei das Kühlen in Abhängigkeit von Steuerparametern einer Behälterherstellungseinheit zur Herstellung von Behältern aus den Vorformlingen geregelt wird,
- und/oder wobei das Kühlen in Abhängigkeit von Steuerparametern einer Behälterbehandlungseinheit zur Behandlung der in der Behälterherstellungseinheit hergestellten Behältern geregelt wird.

Unter dem Regeln der Kühlung in Abhängigkeit von Steuerparametern kann hierbei insbesondere eine Regelung in einem Regelkreis verstanden werden.

Zudem ist beispielsweise denkbar, dass das Kühlen in Abhängigkeit von Steuerparametern einer Spritzgussmaschine zum Herstellen der Vorformlinge, geregelt wird, und/oder das Kühlen in Abhängigkeit von Steuerparametern einer Streckblasmaschine zur Herstellung von Behältern aus den Vorformlingen geregelt wird, und/oder das Kühlen in Abhängigkeit von Steuerparametern einer Abfüllmaschine zur Befüllung der hergestellten Behälter geregelt wird.

Das Kühlen der Behälter, insbesondere das Kühlen der Böden der Behälter, kann dabei durch Anwenden des Kühlmediums auf das Äußere des Behälters erfolgen, beispielsweise durch Blasen oder Spritzen des Kühlmediums auf das Äußere des Behälters.

Beispielsweise kann das Kühlmedium ein gasförmiges Kühlmedium, z.B. Luft, sein und gegen das Äußere des Behälters, insbesondere gegen das Äußere des Bodens des Behälters, geblasen werden.

Alternativ oder zusätzlich kann z.B. das Kühlmedium ein gasförmiges Kühlmedium, z.B. Luft, sein und gegen das Innere des Behälters, insbesondere gegen das Innere des Bodens des Behälters, während des Behälteraufblasprozesses geblasen werden.

Alternativ oder zusätzlich kann das Kühlmedium ein flüssiges Kühlmedium, z.B. Wasser, sein und gegen das Äußere des Behälters, insbesondere gegen das Äußere des Bodens des Behälters, gespritzt oder gestrahlt werden.

Weitere beispielhafte Aspekte der Erfindung bzw. beispielhafte Aspekte der Anspruchsmerkmale werden beispielhaft durch folgende Figuren veranschaulicht:
**Fig. 1****:** Beispielhafte Anlage
**Fig. 2****:** Beispielhaftes Verfahren

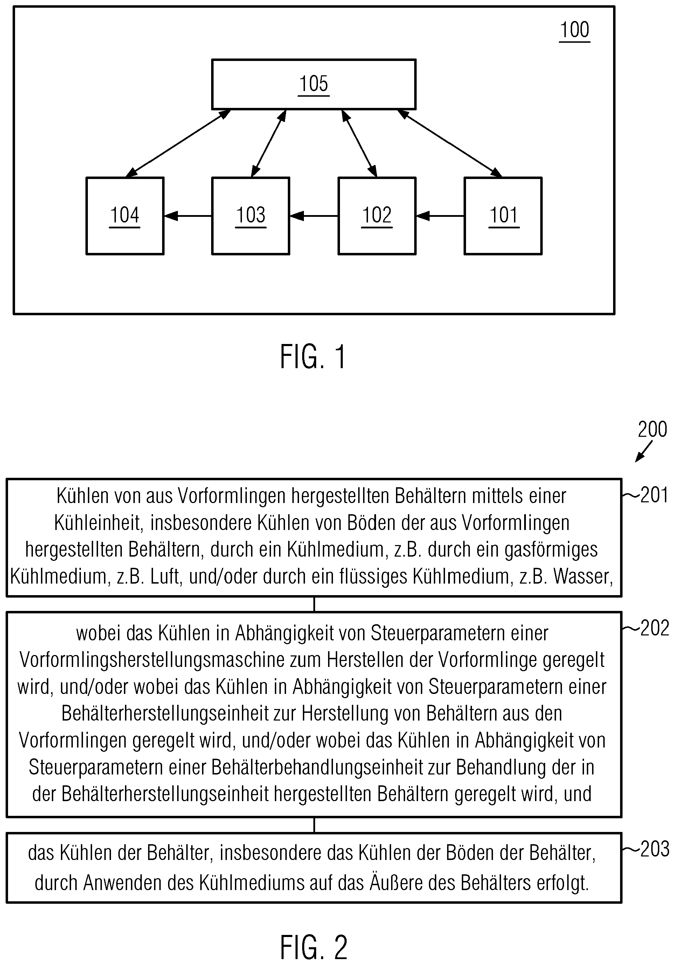

Die **Fig. 1** zeigt schematisch eine beispielhafte Anlage 100 zur Herstellung und Behandlung von Behältern mit mehreren Maschinen bzw. Einheiten 101, 102, 103, 104.

Beispielsweise kann die Anlage 100 eine Vorformlingsherstellungsmaschine 101 zum Herstellen von Vorformlingen, insbesondere eine Spritzgussmaschine, aufweisen.

Ebenso kann die Anlage 100 eine Behälterherstellungseinheit 102 zur Herstellung von Behältern aus den Vorformlingen, z.B. eine Streckblasmaschine, umfassen.

Ebenso kann die Anlage 100 eine der Behälterherstellungseinheit 102 nachgeordnete Behälterbehandlungseinheit 103 zur Behandlung der in der Behälterherstellungseinheit 102 hergestellten Behältern, z.B. eine Etikettiermaschine, z.B. eine Behälterdekorierungsmaschine mit einer Bedruckung oder andersartigen Beschriftung von Behältern z.B. mit einer Laserbeschriftungseinheit oder eine Abfüllmaschine, umfassen.

Zudem kann die Anlage 100 eine Kühleinheit 104 zur Kühlung der in der Behälterherstellungseinheit 102 hergestellten Behältern umfassen, wobei die Kühleinheit 104 beispielhaft nach der Behälterherstellungseinheit 102 angeordnet ist.

Im dargestellten Beispiel ist die Kühleinheit 104 nach der Behälterbehandlungseinheit 103 angeordnet. Sie kann aber beispielsweise auch vor der Behälterbehandlungseinheit 103 angeordnet sein.

Die beispielhafte Kühleinheit 104 kann dazu konfiguriert sein, die in der Behälterherstellungseinheit 102 hergestellten Behälter, insbesondere die Böden der hergestellten Behälter, in Abhängigkeit von Steuerparametern der Vorformlingsherstellungsmaschine 101 und/oder in Abhängigkeit von Steuerparametern der Behälterherstellungseinheit 102 und/oder in Abhängigkeit der Behälterbehandlungseinheit 103, mit einem Kühlmedium zu kühlen.

Beispielhaft ist zudem eine mögliche übergeordnete programmierbare Steuerungseinheit 105 der Anlage 100 dargestellt, wobei die Steuerungseinheit dazu konfiguriert sein kann, Maschinen und Einheiten 101, 102, 103 und 104 der Anlage 100 zu steuern und zu regeln.

Insbesondere kann die mögliche beispielhafte Steuerungseinheit 105 dazu programmiert sein, die besagte beispielhafte Kühleinheit 104 zu steuern, insbesondere in Abhängigkeit von den genannten Steuerparametern der oben und hierein genannten Maschinen und Einheiten 101, 102, 103, 104 der Anlage 100.

Die Maschinen und Einheiten 101, 102, 103 und 104 der Anlage 100 können in einem Block miteinander verbunden sein.

Die **Fig. 2** zeigt ein beispielhaftes schematisches Flussdiagramm für ein beispielhaftes Verfahren 200 zum Kühlen von aus Vorformlingen hergestellten Behältern, welches folgende Schritte umfassen kann:
- ein Kühlen 201 von aus Vorformlingen hergestellten Behältern mittels einer Kühleinheit, insbesondere Kühlen von Böden der aus Vorformlingen hergestellten Behältern, durch ein Kühlmedium, z.B. durch ein gasförmiges Kühlmedium, z.B. Luft, und/oder durch ein flüssiges Kühlmedium, z.B. Wasser,
- und wobei das Kühlen in Abhängigkeit von Steuerparametern einer Vorformlingsherstellungsmaschine zum Herstellen der Vorformlinge geregelt 202 wird,
- und/oder wobei das Kühlen in Abhängigkeit von Steuerparametern einer Behälterherstellungseinheit zur Herstellung von Behältern aus den Vorformlingen geregelt 202 wird,
- und/oder wobei das Kühlen in Abhängigkeit von Steuerparametern einer Behälterbehandlungseinheit zur Behandlung der in der Behälterherstellungseinheit hergestellten Behältern geregelt 202 wird,
- und wobei das Kühlen der Behälter, insbesondere das Kühlen der Böden der Behälter, durch Anwenden 203 des Kühlmediums auf das Äußere des Behälters erfolgt.

Unter dem Regeln der Kühlung in Abhängigkeit von Steuerparametern kann hierbei insbesondere eine Regelung in einem Regelkreis verstanden werden.

Es folgen die Figuren Fig.1 und Fig. 2.

Die Bezugszeichen sind dabei wie folgt belegt:
**100** Beispielhafte Anlage zur Herstellung und Behandlung von Behältern
**101** Vorformlingsherstellungsmaschine
**102** Behälterherstellungseinheit
**103** Behälterbehandlungseinheit
**104** Kühleinheit
**105** Steuereinheit
**200** Beispielhaftes Verfahren zum Kühlen von aus Vorformlingen hergestellten Behältern
**201** Verfahrensschritt
**202** Verfahrensschritt
**203** Verfahrensschritt

## Patentansprüche

1. Anlage (100) zur Herstellung und Behandlung von Behältern, umfassend:
eine Vorformlingsherstellungsmaschine (101) zum Herstellen von Vorformlingen, insbesondere eine Spritzgussmaschine;
wenigstens eine Behälterherstellungseinheit (102) zur Herstellung von Behältern aus den Vorformlingen;
wenigstens eine der Behälterherstellungseinheit (102) nachgeordnete Behälterbehandlungseinheit (104) zur Behandlung der in der Behälterherstellungseinheit (102) hergestellten Behältern;
eine Kühleinheit (103) zur Kühlung der in der Behälterherstellungseinheit (102) hergestellten Behältern, wobei die Kühleinheit (103) nach der Behälterherstellungseinheit (102) angeordnet ist; und
wobei die Kühleinheit (103) dazu konfiguriert ist, die hergestellten Behälter, insbesondere die Böden der hergestellten Behälter, in Abhängigkeit von Steuerparametern der Vorformlingsherstellungsmaschine (101) und/oder in Abhängigkeit von Steuerparametern der Behälterherstellungseinheit (102) und/oder in Abhängigkeit der Behälterbehandlungseinheit (104), mit einem Kühlmedium zu kühlen.

2. Anlage (100) nach Anspruch 1, wobei die Behälterbehandlungseinheit (104) eine Etikettiermaschine, z.B. eine Behälterdekorierungsmaschine mit einer Bedruckung oder andersartigen Beschriftung von Behältern z.B. mit einer Laserbeschriftungseinheit oder eine Abfüllmaschine ist.

3. Anlage nach einem der vorherigen Ansprüche, wobei die Anlage ferner eine Vorformbehandlungseinheit aufweist, zur Behandlung der durch die Vorformlingsherstellungsmaschine hergestellten Behälter, z.B. eine Vorformreinigungseinheit und/oder eine Vorformsterilisierungseinheit, wobei die Vorformbehandlungseinheit der Behälterherstellungseinheit (102) vorgeordnet ist, und wobei die Kühleinheit (103) dazu konfiguriert ist, die hergestellten Behälter, insbesondere die Böden der hergestellten Behälter, in Abhängigkeit von Steuerparametern der Vorformbehandlungseinheit zu kühlen.

4. Anlage (100) nach einem der vorherigen Ansprüche, wobei das Kühlmedium ein gasförmiges Kühlmedium, z.B. Luft, ist und/oder wobei das Kühlmedium ein flüssiges Kühlmedium, z.B. Wasser, ist.

5. Anlage (100) nach dem vorherigen Anspruch, wobei das Kühlmedium ein gasförmiges Kühlmedium ist und wobei die Kühleinheit (103) als Gebläse ausgeführt ist.

6. Anlage (100) nach einem der vorherigen Ansprüche, wobei die wenigstens eine Behälterherstellungseinheit (102) zur Herstellung von Behältern aus den Vorformlingen eine Streckblasmaschine ist, und wobei die Kühleinheit (103) dazu konfiguriert ist, die hergestellten Behälter, insbesondere die Böden der hergestellten Behälter, in Abhängigkeit der Steuerparameter der Streckblasmaschine zu kühlen.

7. Anlage (100) nach dem vorherigen Anspruch, wobei die Kühleinheit (103) dazu konfiguriert ist, die hergestellten Behälter, insbesondere die Böden der hergestellten Behälter, in Abhängigkeit von einem oder mehreren oder allen der folgenden Steuerparameter der Streckblasmaschine zu kühlen: Vorblasdruck, Fertigblasdruck, Zwischenblasdruck, dem zeitlichen Verlauf der Drücke, Temperatur, Steuerparameter eines Heizmoduls der Streckblasmaschine, Steuerparameter eines Kühlmoduls der Streckblasmaschine.

8. Anlage (100) nach einem der vorherigen Ansprüche, wobei die Vorformlingsherstellungsmaschine (101) zum Herstellen von Vorformlingen eine Spritzgussmaschine ist, und wobei die Kühleinheit (103) dazu konfiguriert ist, die hergestellten Behälter, insbesondere die Böden der hergestellten Behälter, in Abhängigkeit der Steuerparameter der Spritzgussmaschine zu kühlen.

9. Anlage (100) nach dem vorherigen Anspruch, wobei die Kühleinheit (103) dazu konfiguriert ist, die hergestellten Behälter, insbesondere die Böden der hergestellten Behälter, in Abhängigkeit von einem oder mehreren oder allen der folgenden Steuerparameter der Spritzgussmaschine zu kühlen: Nachdruck, Einspritzdruck, Einspritzstrom, Spritzprofil, Temperatur.

10. Anlage (100) nach einem der vorherigen Ansprüche, wobei die Behälterbehandlungseinheit (104) eine Abfüllmaschine zur Befüllung der hergestellten Behälter ist und wobei die Kühleinheit (103) dazu konfiguriert ist, die hergestellten Behälter, insbesondere die Böden der hergestellten Behälter, in Abhängigkeit von einem oder mehreren oder allen der folgenden Steuerparameter der Abfüllmaschine zu kühlen: Abfülltemperatur, Abfülldosierung, Abfülldruck, Vorspannzeit, Entlastungszeit, Druckprofil der Abfüllung, Abfülltemperatur.

11. Anlage (100) nach einem der vorherigen Ansprüche, umfassend eine übergeordnete programmierbare Steuerungseinheit, wobei die Steuerungseinheit dazu konfiguriert ist, alle Maschinen und Einheiten der Anlage (100) zu steuern und zu regeln, und wobei die Steuerungseinheit insbesondere dazu programmiert ist, die Kühleinheit (103) zu steuern.

12. Verfahren (200) zum Kühlen von aus Vorformlingen hergestellten Behältern, umfassend:
Kühlen (201) von aus Vorformlingen hergestellten Behältern mittels einer Kühleinheit (103), insbesondere Kühlen von Böden der aus Vorformlingen hergestellten Behältern, durch ein Kühlmedium, z.B. durch ein gasförmiges Kühlmedium, z.B. Luft, und/oder durch ein flüssiges Kühlmedium, z.B. Wasser,
und wobei das Kühlen in Abhängigkeit von Steuerparametern einer Vorformlingsherstellungsmaschine (101) zum Herstellen der Vorformlinge geregelt wird, und/oder wobei das Kühlen in Abhängigkeit von Steuerparametern einer Behälterherstellungseinheit (102) zur Herstellung von Behältern aus den Vorformlingen geregelt wird, und/oder wobei das Kühlen in Abhängigkeit von Steuerparametern einer Behälterbehandlungseinheit (104) zur Behandlung der in der Behälterherstellungseinheit (102) hergestellten Behältern geregelt wird.

13. Verfahren (200) nach dem vorherigen Anspruch, wobei das Kühlen in Abhängigkeit von Steuerparametern einer Spritzgussmaschine zum Herstellen der Vorformlinge geregelt wird, und/ oder wobei das Kühlen in Abhängigkeit von Steuerparametern einer Streckblasmaschine zur Herstellung von Behältern aus den Vorformlingen geregelt wird, und/oder wobei das Kühlen in Abhängigkeit von Steuerparametern einer Abfüllmaschine zur Befüllung der hergestellten Behälter geregelt wird.

14. Verfahren (200) nach einem der vorherigen Verfahrensansprüche, wobei das Kühlen der Behälter, insbesondere das Kühlen der Böden der Behälter, durch Anwenden (203) des Kühlmediums auf das Äußere des Behälters erfolgt.

15. Verfahren (200) nach dem vorherigen Anspruch, wobei das Kühlmedium ein gasförmiges Kühlmedium, z.B. Luft, ist und gegen das Äußere des Behälters, insbesondere gegen das Äußere des Bodens des Behälters, geblasen wird; und/oder wobei das Kühlmedium ein gasförmiges Kühlmedium, z.B. Luft, ist und gegen das Innere des Behälters, insbesondere gegen das Innere des Bodens des Behälters, während des Behälteraufblasprozesses geblasen wird.
